# EUROPEAN PATENT APPLICATION

(11) **EP 2 574 103 A1**
(43) Date of publication of application: **27.03.2013**
(21) Application number: 11791916.7
(22) Date of filing: 03.06.2011
(51) Int. Cl.: H04W 36/08, H04W 36/30, H04W 12/04

(54) **METHOD AND APPARATUS FOR KEY UPDATING**

(30) Priority: 10.06.2010 CN 201010201575
(71) Applicant: Huawei Technologies Co., Ltd., Shenzhen, Guangdong 518129 (CN)
(72) Inventor: CHAI, Li, Guangdong 518129 (CN)
(74) Representative: Körber, Martin Hans
(86) International application number: PCT/CN2011/075266
(87) International publication number: WO 2011/153925

(57) **Abstract**

A method for refreshing a key is provided by the present invention, wherein when a counter in a Packet Data Convergence Protocol PDCP layer of a Radio Bearer RB reaches a threshold, a mobile device receives a cell handover message, re-establishes PDCP layers and Radio Link Control RLC layers for all RBs, keeps Uplink Time Alignment Information, uplink grant resources for uplink shared channel and Physical Uplink Control Channel resources allocated semi-statically, and flushes a buffer of a Medium Access Control MAC layer; the mobile device obtains a new root key, and obtains a new encryption and integrity protection key of a radio resource control plane according to the new root key; the mobile device transmits a cell handover complete message protected by the new encryption and integrity protection key. Thereby, a random access process initiated by the mobile device is avoided and interruption delay caused by the random access initiated by the mobile device is thus avoided. A mobile device and a network node are also provided by the present invention.

## Description

The present application claims the priority of Chinese Patent Application No. 201010201515.1, filed on June 10, 2010 to the State Intellectual Property Office of China, with the title "Method and Apparatus for Refreshing Key", the entire disclosure of which is incorporated herein by reference.

### Field of the Invention

The present invention relates to radio communication technologies, and more particularly, to a method and apparatus for refreshing a key.

### Background of the Invention

At the edge of cell coverage in a mobile communication system, users may experience relatively poor services due to the coverage problem of a wireless network. In order to realize high-rate wireless network coverage and increase throughput at the edge of a cell, a Relay Node (Relay Node, RN) is introduced. The RN is connected with an eNB via a wireless link. An interface between the RN and the eNB is called Un interface, and an interface between the RN and User Equipment (User Equipment, UE) in the cell where the RN is located is called Uu interface.

A Data Radio Bearer (Data Radio Bearer, DRB) of the RN serves multiple UEs with the same or similar service characteristics. Therefore, the count value in a counter on a Packet Data Convergence Protocol (Packet Data Convergence Protocol, PDCP) layer of the RN corresponds to the count value in a PDCP counter of a Radio Bearer (Radio Bearer, RB) of UE. In addition, radio bearer life time of the Un interface is longer than the radio bearer life time of the Uu interface, and would not be released due to service releasing of a certain UE. Therefore, frequency of refreshing a security key of the Un interface is higher than that of the Uu interface.

During a communication process, the eNB initiates an inner-cell RN handover procedure when the count value in the counter on the PDCP layer reaches a threshold, which causes an interruption delay in the RN and thereby affect services of all UEs under the RN in the cell.

### Summary of the Invention

Embodiments of the present invention provide a method for refreshing a key, which can avoid an interruption delay in RN.

According to one aspect, a method for refreshing a key includes:
when a counter in a packet data convergence protocol (PDCP) layer of a radio bearer (RB) reaches a threshold,
receiving, by a mobile device, a cell handover message;
re-establishing, by the mobile device, PDCP layers and radio link control (RLC) layers for all RBs;
keeping, by the mobile device, uplink time alignment information, uplink grant resources for uplink shared channel, and physical uplink control channel resources allocated semi-statically;
flushing, by the mobile device, a buffer of a medium access control (MAC) layer; and
obtaining, by the mobile device, a new root key and obtaining a new encryption and integrity protection key of a radio resource control plane according to the new root key by the mobile device; and
transmitting, by the mobile device, a cell handover complete message protected by the new encryption and integrity protection key.

According to another aspect, a method for refreshing a key includes:
when a counter in a packet data convergence protocol (PDCP) layer of a radio bearer (RB) reaches a threshold,
obtaining, by a network node, a new root key and obtaining a new encryption and integrity protection key of a radio resource control plane according to the new root key;
re-establishing, by the network node, PDCP layers and radio link control (RLC) layers for all RBs;
keeping, by the network node, uplink time alignment information, uplink grant resources for uplink shared channel, and physical uplink control channel resources allocated semi-statically;
flushing, by the network node, a buffer of a medium access control (MAC) layer;
   and
transmitting, by the network node, a handover message so as to enable a mobile device to perform a key refreshing process.

According to another aspect, a mobile device includes:
a determining module, configured to determine that a counter in a packet data convergence protocol (PDCP) layer of a radio bearer (RB) reaches a threshold;
a transceiving module, configured to receive a cell handover message when the determining module determines that the counter in the PDCP layer reaches the threshold, or configured to tramsmit a cell handover complete message protected by a new encryption and integrity protection key obtained by an obtaining module;
a processing module, configured to re-establish PDCP layers and radio link control (RLC) layers of all RBs after the transceiving module receives the cell handover message, keep uplink time alignment information, uplink grant resources for uplink shared channel, and physical uplink control channel resources allocated semi-statically; and flush a buffer of a medium access control (MAC) layer; and
an obtaining module, configured to obtain a new root key after the processing module finishes the processing, and obtain the new encryption and integrity protection key of a radio resource control plane according to the new root key.

According to yet anotheraspect, a network node includes:
a determining module, configured to determine that a counter in a packet data convergence protocol (PDCP) layer of a radio bearer (RB) reaches a threshold;
an obtaining module, configured to obtain a new encryption and integrity protection key of a radio resource control plane according to a new root key when the determining module determines that the counter in the PDCP layer reaches the threshold;
a processing module, configured to re-establish PDCP layers and RLC layers of all RBs after the obtaining module obtains the new encryption and integrity protection key, keep uplink time alignment information, uplink grant resources for uplink shared channel, and physical uplink control channel resources allocated semi-statically, and flush a buffer of a medium access control (MAC) layer; and
a transmitting module, configured to transmit a handover message after the processing module finishes the processing so as to enable a mobile device to perform a key refreshing process.

In the method for refreshing a key in accordance with embodiments of the present invention, the Uplink Time Alignment Information, the uplink grant resources for uplink shared channel, and the physical uplink control channel resources allocated semi-statically are kept, and the buffer of the MAC layer is flushed. Thereby, the random access process initiated by the mobile device can be avoided, and the interruption delay in the mobile device caused by the random access can also be avoided.

### Brief Description of the Drawings

In order to describe technical solutions in embodiments of the present invention more clearly, drawings used in the embodiments will be briefly described hereinafter. Obviously, the drawings described are just some embodiments of the present invention, while other drawings can also be obtained by those skilled in the art without any creative effort.
Figure 1 is a flowchart illustrating a method for refreshing a key in accordance with an embodiment of the present invention.
Figure 2 is a flowchart illustrating a method for refreshing a key in accordance with another embodiment of the present invention.
Figure 3 is a flowchart illustrating a method for refreshing a key in accordance with yet another embodiment of the present invention.
Figure 4 is a flowchart illustrating a method for refreshing a key in accordance with still another embodiment of the present invention.
Figure 5 is a flowchart illustrating a method for refreshing a key in accordance with another embodiment of the present invention.
Figure 6 is a schematic diagram illustrating a mobile device in accordance with an embodiment of the present invention.
Figure 7 is a schematic diagram illustrating a network node in accordance with an embodiment of the present invention.

### Detailed Description of the Invention

To make the objective, technical scheme and merits of the present invention clearer, the present invention will be described hereinafter in detail with reference to accompanying drawings. In the embodiments of the present invention, the network node may be an eNB or a Relay Node, and the embodiments will be hereinafter described by taking the RN or the eNB as a network node. Obviously, the embodiments described are only part of embodiments, but not all embodiments. Any other embodiments which are obtained according to the embodiments by those skilled in the art without any creative efforts should also be in the protection scope of the present invention.

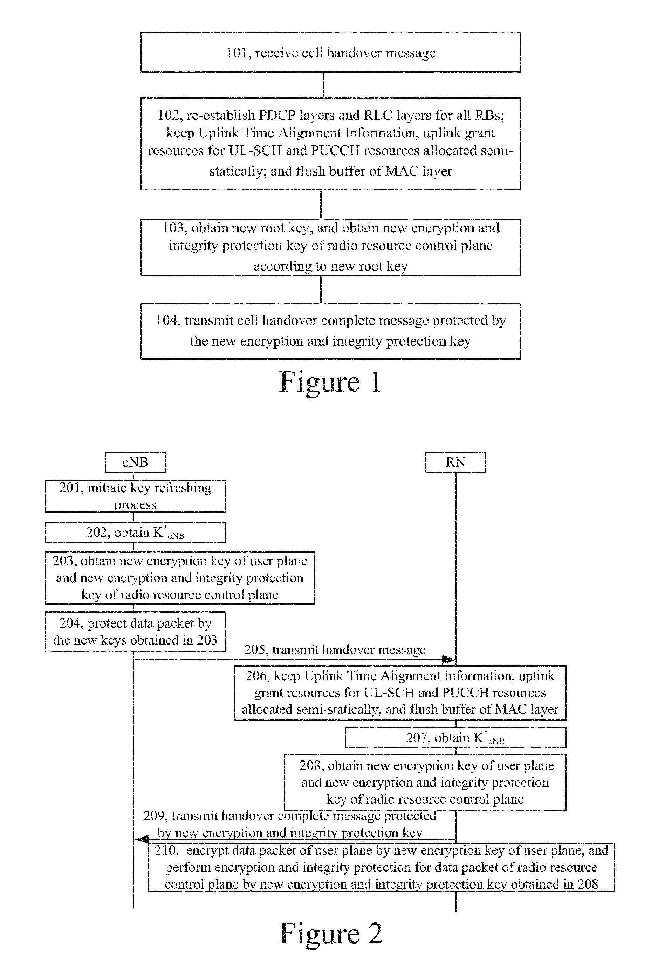

Figure 1 is a flowchart illustrating a method for refreshing a key in accordance with an embodiment of the present invention. As shown in Figure 1, when a counter in a Packet Data Convergence Protocol (PDCP) layer of a Radio Bearer (RB), the method includes the following:
101, A mobile device receives a cell handover message.
102, The mobile device re-establishes PDCP layers and Radio Link Control (Radio Link Control, RLC) layers for all RBs; keeps Uplink Time Alignment Information (Uplink Time Alignment Information), uplink grant resources for uplink shared channel (uplink grant resources for UL-SCH) and Physical Uplink Control Channel (Physical Uplink Control Channel, PUCCH) resources allocated semi-statically; and flushes a buffer of a Medium Access Control (Medium Access Control, MAC) layer.
103, The mobile device obtains a new root key and obtains a new encryption and integrity protection key of a radio resource control plane according to the new root key.
104, The mobile device transmits a cell handover complete message protected by the new encryption and integrity protection key.

When receiving the cell handover message, the mobile device pauses uplink data transmission, rebuilds the DPCP layers and RLC layers for all RBs, and resets the MAC layer. Resetting the MAC layer includes: initializing each logic channel, clearing variables maintained by each logic channel, stopping and resetting all timers started, regarding uplink alignment timers as "time out", clearing the buffer of MSG3 and the buffer of Hybrid Auto Repeat Request (Hybrid Auto Repeat Request, HARQ), releasing all running procedures and configured downlink allocation and uplink grant resources, as well as a Cell Radio Network Temporary Identifier (Cell Radio Network Temporary Identifier, C-RNTI). When a network node initiates a random access process, the mobile device would have an interruption delay due to the random access. In the method of refreshing a key in accordance with this embodiment, the mobile device keeps the Uplink Time Alignment Information, the uplink grant resources for uplink shared channel and the physical uplink control channel resources allocated semi-statically, and flushes the buffer of the MAC layer. Thereby, in the method of this embodiment, the random access process initiated by the mobile device can be avoided, that is, the interruption delay caused by the random access of the mobile device can be avoided.

Figure 2 is a flowchart illustrating a method for refreshing a key in accordance with an embodiment of the present invention, in which the network node is an eNB and the mobile device is a RN. As shown in Figure 2, the method includes the following:
201, Multiple RBs are configured for a PDCP layer of the eNB and RN, and each RB corresponds to one counter. When the count value in a counter of a RB on the PDCP layer at an interface between the eNB and the RN reaches a threshold, the eNB initiates a key refreshing process for an Evolved network node.

The PDCP layer at the interface between the eNB and the RN may be the PDCP layer of the eNB or the PDCP layer of the RN.

In 201, the thresholds for the counter on the PDCP layer of the eNB and RN may be set as 32 bits.

202, The eNB obtains *K*'*_{eNB}* according to a key deduction formula *KDF(K_{eNB}*/*NH, targetPCI, DL-AERFCN).*

In the formula, KDF may represent a key deduction function; *K_{eNB}* may represent a root key for an access network layer of the evolved network node; NH may represent a security parameter corresponding to a next hop chain counter value NCC (Next Hop Chain Counter) sent to the eNB by the core network, used for isolating respective security keys between a source node and a destination node during handover; targetPCI may represent a physical identifier of target cell; *DL-AERFCN* may represent absolute downlink channel number of Evolved Universal Terrestrial Radio Access Network; *K*'*_{eNB}* may represent a new root key for an access network layer of an evolved network node obtained by the eNB.

203, The eNB obtains a new encryption key of a user plane and a new encryption and integrity protection key of a radio resource control plane according to the *K'_{eNB}* obtained by the eNB.

204, The eNB stops downlink data transmission, encrypts a subsequent data packet of the user plane by the new encryption key of the user plane, and performs encryption and integrity protection for a data packet of the radio resource control plane by the new encryption and integrity protection key of the radio resource control plane.

205, The eNB transmits a cell handover message to the RN. The cell handover message contains a new identifier of the RN and a security parameter corresponding to a next hop chain counter value NCC (Next Hop Chain Counter). The security parameter corresponding to the next hop chain counter value NCC is used by the RN to obtain the *K*'*_{eNB}.*

206, The RN re-establishes the PDCP layer and RLC layer of the RB, keeps Uplink Time Alignment Information, uplink grant resources for uplink shared channel, and physical uplink control channel resources allocated semi-statically, flushes the buffer of a MAC layer, and adopts the new identifier of the RN as the C-RNTI identifier. The physical uplink control channel resources allocated semi-statically are used for transmitting a Scheduling Request (Scheduling Request, SR).

207, The RN obtains the *K*'*_{eNB}* according to a key deduction formula *KDF(K_{eNB}*/*NH, targetPCI, DL-AERFCN).*

In the formula, KDF may represent a key deduction function; *K_{eNB}* may represent the root key for the access network layer of the evolved network node; NH may represent the security parameter corresponding to the next hop chain counter value NCC (Next Hop Chain Counter) sent to the eNB by the core network, used for isolating respective security keys between a source node and a destination node during handover; targetPCI may represent a physical identifier of target cell; *DL-AERFCN* may represent absolute downlink channel number of Evolved Universal Terrestrial Radio Access Network; *K*'*_{eNB}* may represent a new root key for the access network layer of the evolved network node obtained by the RN.

208, The RN obtains a new encryption key of a user plane and a new encryption and integrity protection key of a radio resource control plane according to the *K*'*_{eNB}* obtained by the RN.

209, The RN transmits a handover complete message, which is protected by the new encryption and integrity protection key of the radio resource control plane.

210, The RN encrypts a subsequent data packet of the user plane by the new encryption key of the user plane, and performs encryption and integrity protection for a subsequent data packet of the radio resource control plane by the new encryption and integrity protection key of the radio resource control plane.

211, The RLC layer of the RN discards the RLC layer's data packets buffered on the RLC layer. The RLC layer's data packets includes a data packet encrypted by the old encryption key of the user plane, and a data packet for which encryption and integrity protection is performed by the old encryption and integrity protection key of the radio resource control plane. Regarding data packets of the PDCP layer for which no transmission success confirmation indication is received from the RLC layer, the PDCP layer encrypts the data packets of the PDCP layer by the new encryption key of the use plane and performs encryption and security protection for the data packets of the PDCP layer by the new encryption and security protection key of the radio resource control plane, and then re-transmits the data packets protected by the new encryption and integrity protection key to the RLC layer.

In the method in this embodiment of the present invention, the RN rebuilds the PDCP layer and RLC layer of the RB, keeps the Uplink Time Alignment Information, the uplink grant resources for uplink shared channel and the physical uplink control channel resources allocated semi-statically, and clears the buffer of the MAC layer. Thereby, the random access process initiated by the RN is avoided, and thus the interruption delay in the RN caused by the random access is also avoided.

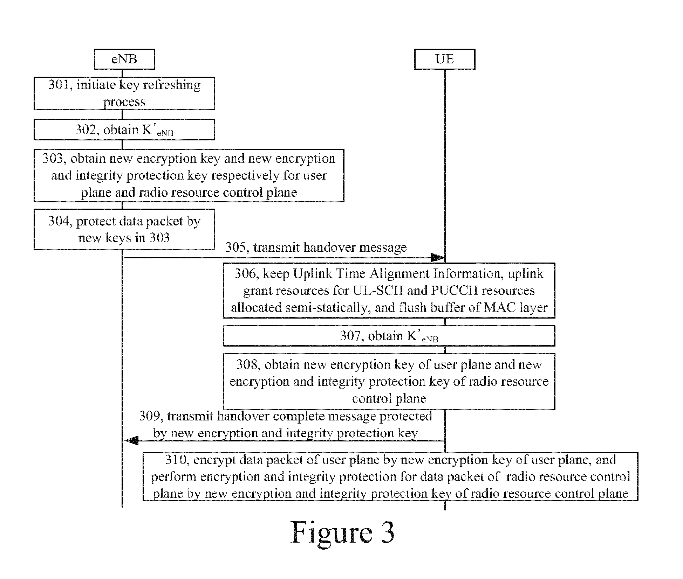

Figure 3 is a flowchart illustrating a method for refreshing a key in accordance with another embodiment of the present invention. This embodimetn is similar to the embodiment shown in Figure 2. What is different is that the mobile device is UE. During a handover process, the UE rebuilds a PDCP layer and an RLC layer of a RB, keeps Uplink Time Alignment Information, uplink grant resources for uplink shared channel and physical uplink control channel resources allocated semi-statically, and clears the buffer of a MAC layer. Thereby, the random access process initiated by the UE is avoided, and thus the interruption delay in the UE caused by the random access is also avoided.

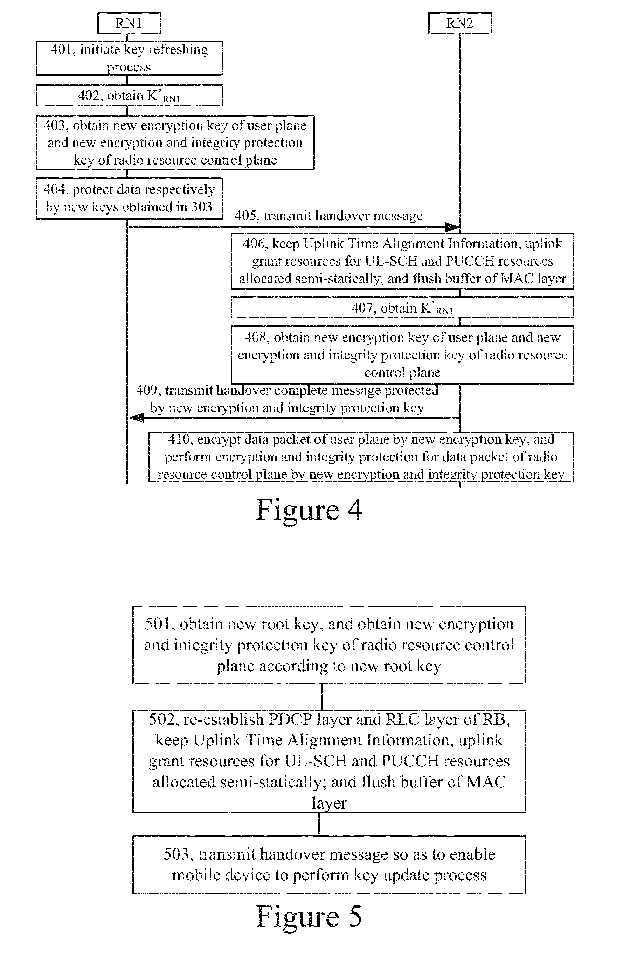

Figure 4 is a flowchart illustrating a method for refreshing a key in accordance with another embodiment of the present invention. The scenario in this embodiment is a multi-hop scenario, the network node is RN1 and the mobile device is RN2; the RN1 is the second hop, the RN2 is the third hop, and RN2 is the next hop of RN1. As shown in Figure 4, the method includes the following:
401, Multiple RBs are configured for a PDCP layer of the RN1 and RN2, and each RB corresponds to one counter. When the count value in a counter of a RB on the PDCP layer at an interface between the RN1 and the RN2 reaches a threshold, the RN1 initiates a key refreshing process for an Evolved network node.

The PDCP layer at an interface between the RN1 and the RN2 may be the PDCP layer of the RN1 or the PDCP layer of the RN2.

In 401, the thresholds for the counter on the PDCP layer of the RN1 and RN2 may be set as 32 bits.

402, The RN1 obtains *K*'_{*RN*1} according to a key deduction formula *KDF(K*_{*RN*1}/*NH, targetPCI, DL-AERFCN).*

In the formula, KDF may represent a key deduction function; *K*_{*RN*1} may represent a root key for an access network layer of the RN1; NH may represent a security parameter corresponding to a next hop chain counter value NCC (Next Hop Chain Counter) sent to the eNB by the core network, used for isolating respective security keys between a source node and a destination node during handover; targetPCI may represent a physical identifier of target cell; *DL-AERFCN* may represent absolute downlink channel number of Evolved Universal Terrestrial Radio Access Network; *K*'_{*RN*1} may represent a new root key for the access network layer of the RN1 obtained by the RN1.

403, The RN1 obtains a new encryption key of a user plane and a new encryption and integrity protection key of a radio resource control plane according to the *K*'_{*RN*1} obtained by the RN1.

404, The RN1 stops downlink data transmission, encrypts a subsequent data packet of the user plane by the new encryption key of the user plane, and performs encryption and integrity protection for a subsequent data packet of the radio resource control plane by the new encryption and integrity protection key of the radio resource control plane.

405, The RN1 transmits a cell handover message to the RN2. The cell handover message contains a new identifier of the RN2 and a security parameter corresponding to a next hop chain counter value NCC (Next Hop Chain Counter). The security parameter corresponding to the next hop chain counter value NCC (Next Hop Chain Counter) is used by the RN2 to obtain the *K*'_{*RN*1}.

406, The RN2 rebuilds the PDCP layer and RLC layer of the RB, keeps Uplink Time Alignment Information, uplink grant resources for uplink shared channel, and physical uplink control channel resources allocated semi-statically, and clears the buffer of a MAC layer, and adopts the new identifier of the RN2 as the C-RNTI identifier. The physical uplink control channel resources allocated semi-statically are used for transmitting a Scheduling Request (Scheduling Request, SR).

407, The RN2 obtains *K*'_{*RN*1} according to a key deduction formula *KDF(K*_{*RN*1}/*NH, targetPCI, DL-AERFCN).*

In the formula, KDF may represent a key deduction function; *K*'_{*RN*1} may represent a root key for an access network layer of the RN1; NH may represent the security parameter corresponding to the next hop chain counter value NCC (Next Hop Chain Counter) sent to the eNB by the core network, used for isolating respective security keys between a source node and a destination node during handover; targetPCI may represent a physical identifier of target cell; *DL-AERFCN* may represent absolute downlink channel number of Evolved Universal Terrestrial Radio Access Network; *K*'_{*RN*1} may represent a new root key for an access network layer of the RN1 obtained by the RN2.

408, The RN2 obtains a new encryption key of a user plane and a new encryption and integrity protection key of a radio resource control plane according to the *K*'_{*RN*1} obtained by the RN2.

409, The RN2 transmits a handover complete message, which is protected by the new encryption and integrity protection key of the radio resource control plane.

410, The RN2 encrypts a subsequent data packet of the user plane by the new encryption key of the user plane, and performs encryption and integrity protection for a subsequent data packet of the radio resource control plane by the new encryption and integrity protection key of the radio resource control plane.

411, The RLC layer of the RN2 discards the RLC layer's data packets buffered on the RLC layer. The RLC layer's data packets may include a data packet encrypted by the old encryption key of the user plane and a data packet for which encryption and integrity protection is performed by the old encryption and integrity protection key of the radio resource control plane. Regarding data packets of the PDCP layer for which no transmission success confirmation indication is received from the RLC layer, the PDCP layer encrypts the data packets of the PDCP layer by the new encryption key of the use plane and performs encryption and security protection for the data packets of the PDCP layer by the new encryption and security protection key of the radio resource control plane, and then re-transmits the data packets which are protected by the new encryption and integrity protection key to the RLC layer.

In the multi-hop scenario, the mobile device in this embodiment is the RN2, and the RN2 rebuilds the PDCP layer and RLC layer of the RB, keeps the Uplink Time Alignment Information, the uplink grant resources for uplink shared channel, and the physical uplink control channel resources allocated semi-statically, and flushes the buffer of the MAC layer. Thereby, the random access process initiated by the RN2 is avoided, and thus the interruption delay in the RN2 caused by the random access is also avoided.

Figure 5 is a flowchart illustrating a method for refreshing a key in accordance with another embodiment of the present invention. As shown in Figure 5, when a counter in a Packet Data Convergence Protocol (PDCP) layer of a Radio Bearer (RB) reaches a threshold, the method includes:
501, A network node obtains a new root key, and obtains a new encryption and integrity protection key of a radio resource control plane according to the new root key.
502, The network node rebuilds the PDCP layer and Radio Link Control (RLC) layer of the RB, keeps Uplink Time Alignment Information, uplink grant resources for uplink shared channel, and Physical Uplink Control Channel resources allocated semi-statically; and flushes the buffer of a Medium Access Control (MAC) layer.
503, The network node transmits a handover message so as to enable a mobile device to perform the key refreshing process.

In the method of refreshing a key in this embodiment, the Uplink Time Alignment Information, the uplink grant resources for uplink shared channel and the physical uplink control channel resources allocated semi-statically are kept, and the buffer of the MAC layer is flushed. Thereby, the random access process initiated by the mobile device is avoided, and thus the interruption delay in the mobile device caused by the random access is also avoided.

Similar to the embodiment shown in Figure 2, the netowrk node in this embodiment may be a RN and the mobile device may be UE; the UE re-establishes the PDCP layer and RLC layer of the RB, keeps the Uplink Time Alignment Information, the uplink grant resources for uplink shared channel and the physical uplink control channel resources allocated semi-statically, and flushes the buffer of the MAC layer. Thereby, the random access process initiated by the UE is avoided, and thus the interruption delay in the UE caused by the random access is also avoided.

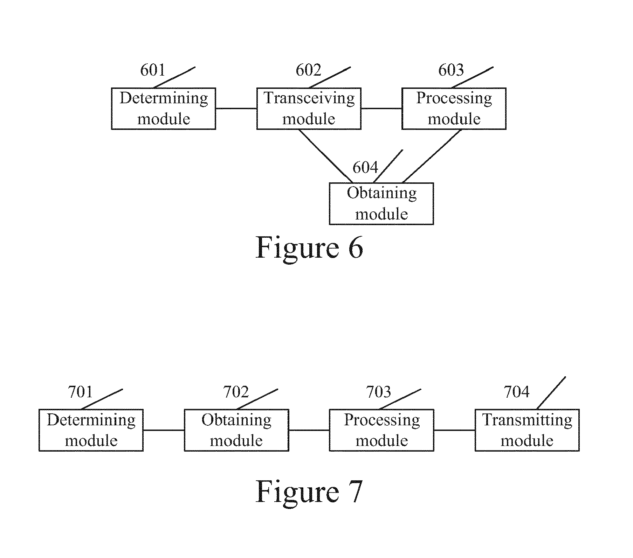

Figure 6 is a schematic diagram illustrating a mobile device in accordance with an embodiment of the present invention. As shown in Figure 6, the mobile device includes:
a determining module 601, configured to determine that a counter in a Packet Data Convergence Protocol (PDCP) layer of a Radio Bearer (RB) reaches a threshold;
a transceiving module 602, configured to receive a cell handover message when the determining module 601 determines that the counter in the PDCP layer reaches the threshold, or configured to tramsmit a cell handover complete message protected by a new encryption and integrity protection key obtained by an obtaining module;
a processing module 603, configured to rebuild PDCP layers and RLC layers of all RBs after the transceiving module 602 receives the cell handover message, keep Uplink Time Alignment Information, uplink grant resources for uplink shared channel, and physical uplink control channel resources allocated semi-statically, and flush a buffer of a MAC layer; and
an obtaining module 604, configured to obtain a new root key after the processing module 603 finishes the processing, and obtain a new encryption and integrity protection key of a radio resource control plane according to the new root key.

In an embodiment, the cell handover message received by the transceiving module 602 may contain a security parameter corresponding to a next hop chain counter value NCC (Next Hop Chain Counter).

Specifially, the obtaining module 604 is configured to obtain the new root key according to the security parameter corresponding to the next hop chain counter value NCC (Next Hop Chain Counter), or obtain the new root key according to an old root key.

The obtaining module 604 is further configured to obtain a new encryption key of a user plane according to the new root key.

In an embodiment, the processing module 603 is further configured to encrypt a subsequent data packet by the new encryption key of the user plane, and perform encryption and integrity protection for a subsequent data packet by the new encryption and integrity protection key of the radio resource control plane.

Furthermore, the processing module 603 is further configured to discard a RLC layer's data packet buffered on the RLC layer, and the data packet includes a packet encrypted by the user plane by the old encryption key and a packet protected by the old encryption and integrity protection key by the radio resource control plane.

In an embodiment, the processing module 603 is further configured to encrypt, by the new encryption key of the user plane, a PDCP layer data packet for which no transmission success confirmation indication is received from the RLC layer; and to perform encryption and integrity protection for the PDCP layer data packet by the new encryption and integrity protection key of the radio resource control plane.

The transceiving module 602 is further configured to retransmit the PDCP layer data packet which is protected by the new encryption and integrity protection key to the RLC layer.

In this embodiment, the mobile device may be UE or RN.

In this embodiment, the mobile device keeps the Uplink Time Alignment Information, the uplink grant resources for uplink shared channel and the physical uplink control channel resources allocated semi-statically, and flushes the buffer of the MAC layer. Consequently, the random access process initiated by the mobile is avoided, and thus the interruption delay in the mobile device caused by the random access is also avoided.

Figure 7 is a schematic diagram illustrating a network node in accordance with an embodiment of the present invention. As shown in Figure 7, the network node includes:
a determining module 701, configured to determine that a counter in a Packet Data Convergence Protocol (PDCP) layer of a Radio Bearer (RB);
an obtaining module 702, configured to obtain a new encryption and integrity protection key of a radio resource control plane according to a new root key when the determining module 701 determines that the counter in the PDCP layer reaches the threshold.
a processing module 703, configured to re-establish PDCP layers and RLC layers of all RBs after the obtaining module 702 obtains the new encryption and integrity protection key, keep Uplink Time Alignment Information, uplink grant resources for uplink shared channel and physical uplink control channel resources allocated semi-statically, and flush a buffer of a MAC layer; and
a transmitting module 704, configured to transmit a handover message after the processing module 703 finishes the processing so as to enable a mobile device to perform a key refreshing process.

In an embodiment, the obtaining module 702 is further configured to obtain the new root key according to a root key stored in the obtaining module 702 or according to a security parameter corresponding to an next hop chain counter value NCC (Next Hop Chain Counter) stored in the obtaining module 702.

In addition, the obtaining module 702 is further configured to obtain a new encryption key of a user plane according to the new root key. Accordingly, the processing module 703 is further configured to encrypt a subsequent data packet by the new encryption key of the user plane, and to perform encryption and integrity protection for a subsequent data packet by the new encryption and integrity protection key of the radio resource control plane.

In an embodiment, the handover message transmitted by the transmitting module 704 may contain the security parameter corresponding to the next hop chain counter value NCC (Next Hop Chain Counter), so as to enable a mobile device to obtain the new root key.

In this embodiment, the network node includes an eNB or a RN.

In this embodiment, the network node keeps the Uplink Time Alignment Information, the uplink grant resources for uplink shared channel and the physical uplink control channel resources allocated semi-statically, and flushes the buffer of the MAC layer. Consequently, the random access process initiated by the mobile device is avoided, and thus the interruption delay in the mobile device caused by the random access is also avoided.

It should be noted that each module in the above mobile device or network node is defined according to function logics, while it should not limitted to the above definition as long as the functions can be implemented. In addition, respective names of modules are only used for differentiating each other, but not for limiting the the protection socpe of the present invention.

According to the above description of embodiments, it can be clearly understood by those skilled in the art that all or part of the steps in each method in the embodiments can be realized by software accompanying with relevant hardware. The software may be stored in a computer readable storage medium, which may be a read-only memory or a magnetic disk or an optical disk.

The foregoing is only embodiments of the present invention. The protection scope of the present invention, however, is not limited to the above description. Any change or substitution, easily occurring to those skilled in the art, should be covered by the protection scope of the present invention.

## Claims

1. A method for refreshing a key, when a counter in a packet data convergence protocol (PDCP) layer of a radio bearer (RB) reaches a threshold, comprising:
receiving, by a mobile device, a cell handover message;
re-establishing, by the mobile device, PDCP layers and radio link control (RLC) layers for all RBs;
keeping, by the mobile device, uplink time alignment information, uplink grant resources for uplink shared channel, and physical uplink control channel resources allocated semi-statically;
flushing, by the mobile device, a buffer of a medium access control (MAC) layer; and
obtaining, by the mobile device, a new root key and obtaining a new encryption and integrity protection key of a radio resource control plane according to the new root key by the mobile device; and
transmitting, by the mobile device, a cell handover complete message protected by the new encryption and integrity protection key.

2. The method of claim 1, wherein the obtaining, by the mobile device, the new root key comprises:
obtaining, by the mobile device, the new root key according to an old root key; or,
obtaining, by the mobile device, the new root key according to a security parameter corresponding to a next hop chain counter value NCC, the security parameter of the next hop chain counter value NCC being contained in the cell handover message received by the mobile device.

3. The method of claim 2, further comprising:
obtaining, by the mobile device, a new encryption key of a user plane according to the new root key;
encrypting, by the mobile device, a subsequent data packet by the new encryption key of the user plane, and performing encryption and integrity protection for a subsequent data packet according to the new encryption and integrity protection key of the radio resource control plane.

4. The method of claim 3, further comprising:
discarding, by an RLC layer of the mobile device, an RLC layer data packet buffered on the RLC layer, the RLC layer data packet discarded comprising a data packet encrypted by the user plane by an old encryption key and a data packet protected by an old encryption and integrity protection key of the radio resource control plane;
wherein the encrypting, by the mobile device, a subsequent data packet by the new encryption key of the user plane and the performing the encryption and integrity protection for a subsequent data packet according to the new encryption and integrity protection key of the radio resource control plane comprise:
encrypting, by the PDCP layer of the mobile device, a PDCP layer data packet for which no transmission success confirmation indication is received from the RLC layer by the new encryption key of the usr plane, and performing the encryption and integrity protection for the PDCP layer data packet by the new encryption and integrity protection key of the radio resource control plane;
wherein the method further comprises: retransmitting, by the PDCP layer of the mobile device, the PDCP layer data packet which is protected by the new encryption and integrity protection key to the RLC layer.

5. The method of any one of claims 1 to 4, wherein the mobile device comprises User Equipment (UE) or a Relay Node (RN).

6. A method for refreshing a key, when a counter in a packet data convergence protocol (PDCP) layer of a radio bearer (RB) reaches a threshold, comprising:
obtaining, by a network node, a new root key and obtaining a new encryption and integrity protection key of a radio resource control plane according to the new root key;
re-establishing, by the network node, PDCP layers and radio link control (RLC) layers for all RBs;
keeping, by the network node, uplink time alignment information, uplink grant resources for uplink shared channel, and physical uplink control channel resources allocated semi-statically;
flushing, by the network node, a buffer of a medium access control (MAC) layer; and
transmitting, by the network node, a handover message so as to enable a mobile device to perform a key refreshing process.

7. The method of claim 6, wherein the obtaining, by the network node, the new root key comprises:
obtaining, by the network node, the new root key according to an old root key or a security parameter corresponding to a next hop chain counter value NCC which is stored in the network node.

8. The method of claim 7, further comprising:
obtaining, by the network node, a new encryption key of a user plane according to the new root key;
encrypting, by the network node, a subsequent data packet by the new encryption key of the user plane, and performing encryption and integrity protection for a subsequent data packet by the new encryption and integrity protection key of the radio resource control plane by the network node.

9. The method of claim 6, wherein the handover message sent by the network node contains a security parameter corresponding to a next hop chain counter value NCC.

10. The method of any one of claims 6 to 9, wherein the network node comprises an eNB or a Relay Node (RN).

11. A mobile device, comprising:
a determining module, configured to determine that a counter in a packet data convergence protocol (PDCP) layer of a radio bearer (RB) reaches a threshold;
a transceiving module, configured to receive a cell handover message when the determining module determines that the counter in the PDCP layer reaches the threshold, or configured to tramsmit a cell handover complete message protected by a new encryption and integrity protection key obtained by an obtaining module;
a processing module, configured to re-establish PDCP layers and radio link control (RLC) layers of all RBs after the transceiving module receives the cell handover message, keep uplink time alignment information, uplink grant resources for uplink shared channel, and physical uplink control channel resources allocated semi-statically; and flush a buffer of a medium access control (MAC) layer; and
an obtaining module, configured to obtain a new root key after the processing module finishes the processing, and obtain the new encryption and integrity protection key of a radio resource control plane according to the new root key.

12. The mobile device of claim 11, wherein the cell handover message received by the transceiving module contains a security paramter corresponding to a next hop chain counter value NCC;
wherein the obtaining module is configured to obtain the new root key according to the security paramter corresponding to the next hop chain counter value NCC; or, configured to obtain the new root key according to an old root key.

13. The mobile device of claim 12, wherein the obtaining module is further configured to obtain a new encryption key of a user plane according to the new root key;
wherein the processing module is further configured to encrypt a subsequent data packet by the new encryption key of the user plane and to perform encryption and integrity protection for a subsequent data packet by the new encryption and integrity protection key of the radio resource control plane.

14. The mobile device of claim 13, wherein the processing module is further configured to discard a RLC layer data packet buffered on an RLC layer, wherein the RLC layer data packet discarded comprises a data packet encrypted by an old encryption key by the user plane and a data packet protected by an old encryption and integrity protection key by the radio resource control plane;
wherein the processing module is configured to encrypt a PDCP layer data packet for which no transmission success confirmation indication is received from the RLC layer, and perform the encryption and integrity protection for the PDCP layer data packet by the new encryption and integrity protection key of the radio resource control plane;
wherein, the transceiving module is further configured to retransmit the PDCP layer data packet which is protected by the new encryption and integrity protection key to the RLC layer from the PDCP layer.

15. The mobile device of any one of claims 11 to 14, wherein the mobile device comprises User Equipment (UE) or a Relay Node (RN).

16. A network node, comprising:
a determining module, configured to determine that a counter in a packet data convergence protocol (PDCP) layer of a radio bearer (RB) reaches a threshold;
an obtaining module, configured to obtain a new encryption and integrity protection key of a radio resource control plane according to a new root key when the determining module determines that the counter in the PDCP layer reaches the threshold;
a processing module, configured to re-establish PDCP layers and RLC layers of all RBs after the obtaining module obtains the new encryption and integrity protection key, keep uplink time alignment information, uplink grant resources for uplink shared channel, and physical uplink control channel resources allocated semi-statically, and flush a buffer of a medium access control (MAC) layer; and
a transmitting module, configured to transmit a handover message after the processing module finishes the processing so as to enable a mobile device to perform a key refreshing process.

17. The network node of claim 16, wherein
the obtaining module is further configured to obtain the new root key according to a root key stored in the obtaining module or according to a security parameter corresponding to a next hop chain counter value NCC stored in the obtaining module.

18. The network node of claim 17, wherein
the obtaining module is further configured to obtain a new encryption key of a user plane according to the new root key ;
wherein the processing module is further configured to encrypt a subsequent data packet by the new encryption key of the user plane, and configured to perform encryption and integrity protection for a subsequent data packet by the new encryption and integrity protection key of the radio resource control plane.

19. The network node of claim 16, wherein
the handover message transmitted by the transmitting module contains a security parameter corresponding to a next hop chain counter value NCC, so as to enable a mobile device to obtain the new root key.

20. The network node of any one of claims 16 to 19, wherein the network node comprises an eNB or a Relay Node (RN).

21. A method for refreshing a key, when a counter in a packet data convergence protocol (PDCP) layer of a radio bearer (RB) reaches a threshold, comprising:
receiving, by a mobile device, a cell handover message, the cell handover message containing a new identifier of the mobile device and a security parameter corresponding to a next hop chain counter value NCC;
re-establishing, by the mobile device, PDCP layers and radio link control (RLC) layers for all RBs;
flushing, by the mobile device, a buffer of a medium access control (MAC) layer so as to enable the PDCP layers and the RLC layers for all the RBs to clear data encrypted by an old key;
obtaining, by the mobile device, a new root key according to the security parameter, and obtaining, by the mobile device, a new encryption and integrity protection key of a radio resource control plane according to the new root key and the new identifier;
keeping, by the mobile device, uplink time alignment information, uplink grant resources for uplink shared channel, and physical uplink control channel resources allocated semi-statically;
transmitting, by the mobile device, a cell handover complete message protected by the new encryption and integrity protection key.

22. The method of claim 21, further comprising:
obtaining, by the mobile device, a new encryption key of a user plane according to the new root key;
encrypting, by the mobile device, a subsequent data packet by the new encryption key of the user plane, and performing, by the mobile device, encryption and integrity protection for a subsequent data packet according to the new encryption and integrity protection key of the radio resource control plane.

23. The method of claim 22, further comprising:
discarding, by an RLC layer of the mobile device, an RLC layer data packet buffered on the RLC layer, the RLC layer data packet discarded comprising a data packet encrypted by the user plane by an old encryption key and a data packet protected by an old encryption and integrity protection key of the radio resource control plane;
wherein the encrypting a subsequent data packet by the new encryption key of the user plane and the performing the encryption and integrity protection for a subsequent data packet according to the new encryption and integrity protection key of the radio resource control plane comprise:
encrypting, by a PDCP layer of the mobile device, a PDCP layer data packet for which no transmission success confirmation indication is received from the RLC layer by the new encryption key of the user plane, and performing the encryption and integrity protection for the PDCP layer data packet by the new encryption and integrity protection key of the radio resource control plane;
wherein the method further comprises: retransmitting, by the PDCP layer of the mobile device, the PDCP layer data packet which is protected by the new encrypton and integrity protection key to the RLC layer.

24. The method of any one of claims 21 to 23, wherein the mobile device comprises User Equipment (UE) or a Relay Node (RN).

25. A method for refreshing a key, when a counter in a packet data convergence protocol (PDCP) layer of a radio bearer (RB) reaches a threshold, comprising:
obtaining, by a network node, a new root key according to a security parameter corresponding to a next hop chain counter value NCC stored in the network node;
obtaining a new encryption and integrity protection key of a radio resource control plane according to the new root key;
re-establishing, by the mobile device, PDCP layers and radio link control (RLC) layers for all RBs;
flushing, by the mobile device, a buffer of a medium access control (MAC) layer so as to enable the PDCP layers and the RLC layers for all the RBs to clear data encrypted by an old key;
transmitting, by the mobile device, a cell handover message, the cell handover message containing a new identifier of the mobile device and the security parameter corresponding to the next hop chain counter value NCC so as to enable a mobile device to perform a key refreshing process according to the new identifier and the security parameter corresponding to the next hop chain counter value.

26. The method of claim 25, further comprising:
obtaining, by the network node, a new encryption key of a user plane according to the new root key;
encrypting, by the network node, a subsequent data packet by the new encryption key of the user plane, and performing, by the network node, encryption and integrity protection for a subsequent data packet by the new encryption and integrity protection key of the radio resource control plane.

27. The method of claim 25 or 26, wherein the network node comprises an eNB and a Relay Node (RN).

28. An apparatus for refreshing a key, comprising:
a unit configured to determine that a counter in a packet data convergence protocol (PDCP) layer of a radio bearer (RB) reaches a threshold,;
a unit configured to receive a cell handover message, the cell handover message containing a new identifier of a mobile device and a security paramter corresponding to a next hop chain counter value NCC;
a unit configured to rebuild PDCP layers and radio link control (RLC) layers of all RBs, and to flush a buffer of a medium access control (MAC) layer;
a unit configured to keep uplink time alignment information, uplink grant resources for uplink shared channel, and physical uplink control channel resources allocated semi-statically;
a unit configured to obtain a new root key according to the security parameter, and to obtain a new encryption and integrity protection key of a radio resource control plane according to the new root key and the new identifier; and
a unit configured to transmit a cell handover complete message which is protected by the new encryption and integrity protection key.

29. The apparatus of claim 28, further comprising:
a unit configured to obtain a new encryption key of a user plane according to the new root key;
a unit configured to encrypt a subsequent data packet by the new encryption key of the user plane and to perform encryption and integrity protection for a subsequent data packet by the new encryption and integrity protection key of the radio resource control plane.

30. An apparatus for refreshing a key, comprising:
a unit configured to determine that a counter in a packet data convergence protocol (PDCP) layer of a radio bearer (RB) reaches a threshold;
a unit configured to obtain a new root key according to a security paramter corresponding to a next hop chain counter value NCC stored in the apparatus;
a unit configured to obtain a new encryption and integrity protection key of a radio resource control plane according to the new root key;
a unit configured to re-establish PDCP layers and radio link control (RLC) layers of all RBs, and to flush a buffer of a medium access control (MAC) layer;
a unit configured to transmit a handover message, the handover message containing the security paramter corresponding to the next hop chain counter value NCC and a new identifier of a mobile device.

31. The apparatus of claim 30, further comprising:
a unit configured to obtain a new encryption key of a user plane according to the new root key;
a unit configured to encrypt a subsequent data packet by the new encryption key of the user plane and to perform encryption and integrity protection for a subsequent data packet by the new encryption and integrity protection key of the radio resource control plane.
